# EUROPÄISCHE PATENTSCHRIFT

(11) **EP 0 738 672 B1**
(45) Veröffentlichungstag und Bekanntmachung des Hinweises auf die Patenterteilung: **06.05.1999**
(21) Anmeldenummer: 96100825.7
(22) Anmeldetag: 20.01.1996
(51) Int. Cl.: B65G 33/02, B65G 47/88

(54) **Vorrichtung zum Vereinzeln von übereinander verkreuzten Bügelhaken**
Device for separating crosswise superimposed hanger hooks
Dispositif pour séparer des crochets superposés de travers

(30) Priorität: 20.04.1995 DE 19514604
(43) Veröffentlichungstag der Anmeldung: 23.10.1996
(73) Patentinhaber: DÜRKOPP ADLER AKTIENGESELLSCHAFT, D-33719 Bielefeld (DE)
(72) Erfinder: Janzen, Paul, D-33609 Bielefeld (DE); Niesen, Klaus, D-33611 Bielefeld (DE)
(74) Vertreter: Rehmann, Klaus-Thorsten, Dipl.-Ing.

(56) Entgegenhaltungen:
- EP-A- 0 346 991
- WO-A-93/03985
- DE-U- 8 905 995
- PATENT ABSTRACTS OF JAPAN vol. 12, no. 105 (M-681), 6.April 1988 & JP-A-62 235120 (HITACHI), 15.Oktober 1987,

## Beschreibung

Die Erfindung betrifft eine Vorrichtung zum Vereinzeln von übereinander verkreuzten Haken eines auf Bügeln oder dergleichen hängend transportierten Fördergutes, mit einem sich drehenden, im wesentlichen zylinderförmigen zumindest teilweise hohlen Körper, den die Haken umgreifen und von dem sie transportiert werden, wobei der Körper eine radial nach außen weisende, zwischen zwei Haken greifende Vereinzelungseinrichtung aufweist.

In Hängeförderanlagen, mit denen beispielsweise auf Kleiderbügel hängende Kleidungsstücke sortierend bzw. kommissionierend transportiert werden, kommt es regelmäßig vor, daß sich während des Transportes hintereinander laufende Bügel mit ihren Haken kreuzen, so daß zwei oder mehrere Bügelhaken übereinander angeordnet sind. Zum automatischen Sortieren bzw. Kommissionieren ist es notwendig, daß die Bügel einzeln automatisch erfaßbar sind. Eine automatische Zählvorrichtung kann in aller Regel übereinander gekreuzt hängende Bügelhaken nicht als mehrere Haken erkennen, sondern zählt dann nur einen Haken. Auch einzelnes Ausgleisen von Bügeln setzt voraus, daß keine Bügelhaken verkreuzt sind.

Eine gattungsgemäße Vorrichtung ist in der WO 93/03985 offenbart. Die Bügelhaken werden auf ein sich drehendes Rohr geleitet, das eine nach radial außen weisende Vereinzelungseinrichtung in Form eines Trennmessersteges aufweist. Unterhalb des sich drehenden Rohres sind zwei Trennfinger angeordnet, die voneinander unabhängig vor- und zurückschiebbar angetrieben sind. Die Trennfinger werden abwechselnd angesteuert und sind parallel so dicht aneinander angeordnet, daß jeweils nur ein Bügelhakenhals zwischen sie paßt. Durch eine entsprechende Ansteuerung der Trennfinger werden zwei übereinander gekreuzte Bügelhaken zu der Vereinzelungseinrichtung positioniert. Der mit dem Rohr umlaufende Trennmessersteg greift dann zwischen die beiden Bügelhaken ein und hebt den oberen Bügelhaken über den unteren hinweg, wodurch sie getrennt werden. Durch eine entsprechende Steuerung der Trennfinger werden die beiden dann getrennten Bügel weiter transportiert.

Bei dieser Ausführungsform ist i. a. die Funktionsfähigkeit nur gewährleistet, solange nicht mehr als zwei Bügelhaken gekreuzt sind. Außerdem ist die Ansteuerung der Trennfinger oft kompliziert, da ein Weitertransport des hinteren Bügelhakens normalerweise nur möglich ist, wenn sich der Trennmessersteg unten, das heißt im offenen Bereich der Bügelhakenkrümmung befindet.

Die EP 0 346 991 A1 offenbart eine Vereinzelungseinrichtung für Bügelhaken, die auf einer Spindel gefördert werden. Die Vereinzelungsvorrichtung wird gebildet durch scheibenförmige Trennelemente, die auf der Spindel befestigt sind. Die Trennelemente sind einfach gewendelt, so daß einem zunächst einzelne Separierfinger diametral zwei Separierfinger gegenüberliegen. Die Steigung der spiralförmigen Scheibe ist so, daß der Abstand zwischen den beiden Separierfingern in etwa dem Drahtdurchmesser des Bügelhakens entspricht, so daß immer nur ein Bügelhaken von der Vereinzelungseinrichtung ergriffen werden kann.

Die JP 62-235 120 (A) offenbart eine Vereinzelungsvorrichtung, bei der über den Umfang einer Spindel verteilt in axialer Richtung versetzt angeordnete Haken vorgesehen sind, die zwischen einzelne Bügelhaken greifen und diese trennen können.

Von dieser Problemstellung ausgehend soll die bekannte Vorrichtung zum Vereinzeln verbessert werden.

Die Problemlösung erfolgt erfindungsgemäß dadurch, daß die Vereinzelungseinrichtung eine Mehrzahl parallel angeordneter Stifte aufweist, die im Inneren des Körpers federnd gelagert sind und über Langlöcher aus dem Körper herausragen.

Durch diese Ausbildung ist es zum einen möglich, auch mehr als zwei miteinander verkreuzte Bügelhaken zu vereinzeln, da durch die parallele Anordnung der Stifte mehrere hintereinander liegende Vereinzelungsvorgänge durchgeführt werden können. Anstatt eines festgelegten Taktes ist damit ein stetiger Bewegungsablauf in der Vereinzelungsvorrichtung möglich und die Vereinzelung ist unabhängig von der zeitlichen Aufeinanderfolge herannahender Bügel. Natürlich können auch Bügel vereinzelt werden, deren Haken nicht verkreuzt sind.

Durch die Flexibilität, die durch die federnd gelagerten Stifte erreicht wird, ist die Wirkungsweise beim Vereinzeln ähnlich der eines Kammes. Harte Zusammenstöße der Vereinzelungseinrichtung mit den zu vereinzelnden Bügeln werden damit sicher vermieden. Dadurch wird nicht nur die Geräuschentwicklung reduziert, sondern es wird ebenso verhindert, daß hart getroffene Bügelhaken aus der Vorrichtung herauskatapultiert werden.

Vorzugsweise sind die Stifte an einer axial verschiebbar gelagerten, drehbaren Welle innerhalb des hohlen Körpers befestigt. Wobei insbesondere jeder Stift an einer separaten Welle befestigt ist.

Dabei kann eine besonders raumsparende Anordnung erreicht werden, wenn die einzelnen Wellen ineinandergesteckt und in symmetrischer Anordnung gegenüber einer radialen Linie spiegelbildlich im Hohlkörper angeordnet sind. Die axiale Bewegbarkeit der einzelnen Wellenanordnungen ist dann entgegengerichtet. Hieraus resultiert eine unterschiedliche Bewegungsrichtung der Stifte, so daß ein Ausweichen beim Vereinzeln für jede Art miteinander gekreuzter Bügel möglich ist.

In einem Ausführungsbeispiel der Erfindung sind vier Stifte vorgesehen, von denen zwei auf je einer Hohlwelle und zwei auf je einer Vollwelle angeordnet sind und jeweils eine Vollwelle in einer Hohlwelle verläuft. Hierdurch wird der notwendige Bauraum optimiert. Vorzugsweise sind die Stifte mittels Schrauben in den Wellen befestigt. Weiterhin vorzugsweise können sie eine abgekröpfte Spitze aufweisen, mit der die Bügelhaken sicher von unten ergriffen werden können und durch die verhindert wird, daß beim Ausheben des oberen Bügels dieser über den Stift herüberrutscht.

Der Abstand zwischen zwei Stiften entspricht ungefähr dem Durchmesser eines Bügelhakens, damit immer nur ein Haken sicher geführt wird. Der Körper ist vorzugsweise eine Spindel, die wiederum beidseitig mit Wellen verbunden ist.

Die Stifte sind vorzugsweise axial und radial versetzt angeordnet. Für jeden Stift ist eine kombinierte axiale und radiale Bewegung ausführbar. Dadurch ist eine besonders geräuscharme und gleichmäßige Entflechtung der Bügelhaken möglich.

Bei einem weiteren Ausführungsbeispiel sind die Stifte jeweils in einem axial gefederten Bolzen gelagert, wobei mindestens vier Bolzen im Inneren des Hohlkörpers vorgesehen sind. Damit wird der Aufbau im Inneren der Hohlwelle vereinfacht.

Vorzugsweise können die Stifte im Hohlkörper in einer elastischen Masse, beispielsweise Gummi oder dergleichen vergossen sein. Die Beweglichkeit kann dann entsprechend der Materialauswahl eingestellt werden. Die Elastizität der Masse muß ausreichend sein, um die Stifte in ihre Ursprungslage zurückzufedern.

Weiterhin vorzugsweise können die Stifte jeweils radial um 90° versetzt angeordnet sein und dabei ist es vorteilhaft, wenn die Stifte so angeordnet sind, daß ihre zentrale Achse (Längsachse) parallel zu einer radialen Linie verläuft.

Anhand einer Zeichnung sollen Ausführungsbeispiele der Erfindung nachfolgend näher erläutert werden. Es zeigt:
- Figur 1 -: den Axialschnitt durch die erfindungsgemäße Vorrichtung,
- Figur 2 -: den Schnitt entlang der Linie II-II nach Figur 1,
- Figur 3 -: die Seitenansicht nach Figur 1,
- Figur 4 -: die Seitenansicht der erfindungsgemäßen Vorrichtung mit darauf transportierten Bügelhaken,
- Figur 5 -: die Draufsicht gemäß Sichtpfeil V nach Figur 4,
- Figur 6 -: die Seitenansicht der erfindungsgemäßen Vorrichtung,
- Figuren 7-10 -: den Vereinzelungsvorgang in chronologischer Reihenfolge,
- Figur 11 -: die schematische Darstellung der Stellung der Stifte jeweils entsprechend einem Zeitpunkt nach Figuren 7 bis 10 gemäß Sichtpfeil X,
- Figur 12 -: die Ansicht gemäß Sichtpfeil IX nach Figur 5,
- Figur 13 -: ein weiteres Ausführungsbeispiel der Erfindung,
- Figur 14 -: ein weiteres Ausführungsbeispiel der Erfindung,
- Figur 15 -: die Ansicht gemäß Sichtpfeil XV nach Figur 14.

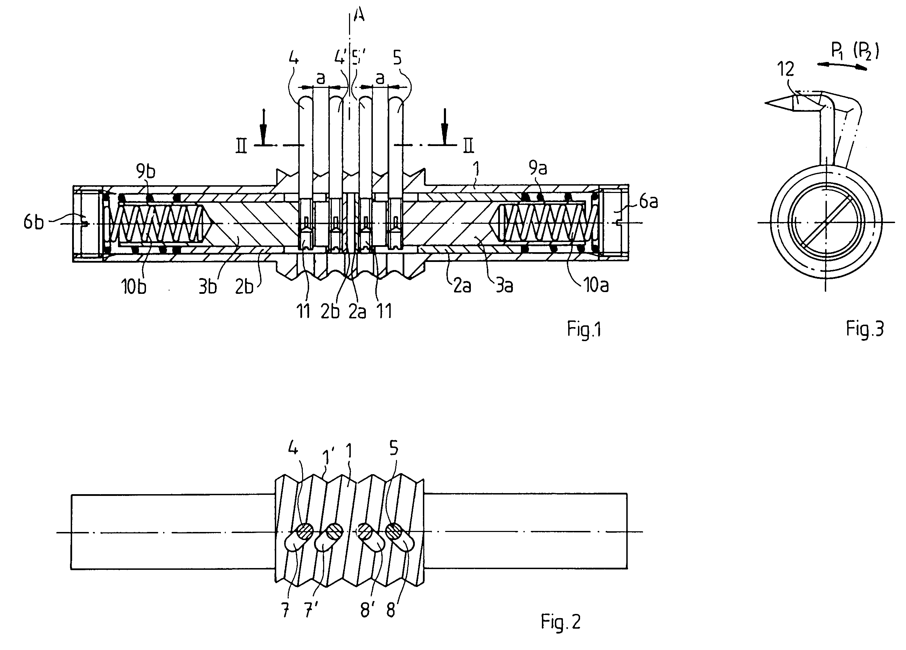

Die Vorrichtung zum Vereinzeln besteht im wesentlichen aus der hohlen Spindel 1 und den darin angeordneten je einen Stift 4, 4'; 5,5' aufweisenden Wellen 2a,2b;3a,3b. In der Spindel 1 sind tangential schräg verlaufende Langlöcher 7,7';8,8' angeordnet, wobei der Verlauf der beiden auf der Zeichnung (Figur 2) links angeordneten Langlöcher 7,7' entgegengesetzt zu dem der beiden rechts angeordneten Langlöcher 8,8' ist. Durch die Langlöcher 7,7';8,8' ragen die Stifte 4,4',5,5' aus dem Inneren der Spindel 1 radial nach außen hervor.

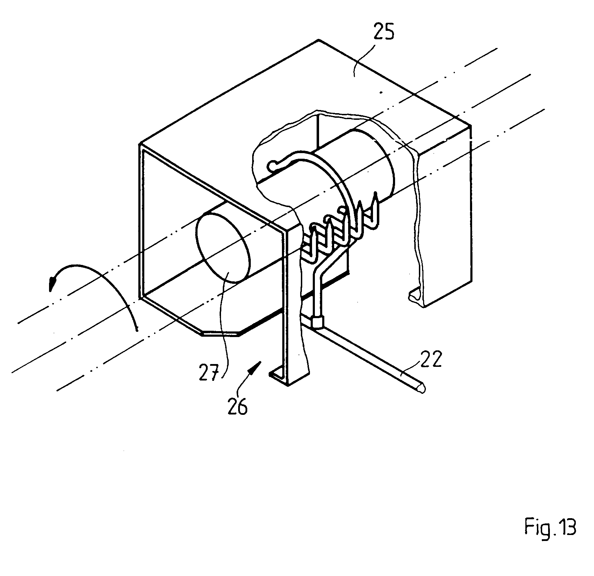

Die Wellen 2a,2b, in denen die Stifte 4,5 über Schrauben 11 befestigt sind, sind als Hohlwellen ausgeführt und nehmen die als Vollwellen ausgebildeten Wellen 3a,3b auf, in denen die Stifte 4',5' ebenfalls über Schrauben 11 befestigt sind. Entlang der radialen Symmetrielinie A sind die Wellen 2a,3a gegenüber den Wellen 2b,3b spiegelbildlich angeordnet. Die Wellen 2a,2b,3a,3b sind axial verschiebbar gelagert und stützen sich gegen Druckfedern 9a,9b bzw. 10a,10b ab. Über Druckschrauben 6a,6b, die in die Spindel 1 einschraubbar sind, werden die Federn 9a,9b;10a,10b vorgespannt und dadurch die notwendige Kraft, die zu einer Auslenkbewegung der Stifte 4,4',5,5' führt festgelegt. Durch die spiegelbildliche Anordnung der Wellen 2a,3a;2b,3b führen die Stifte 4,4';5,5' in den Langlöchern 7,7';8,8' eine entgegengerichtete Bewegung analog der Sichtpfeile P₁,P₂ (Figur 12) aus.

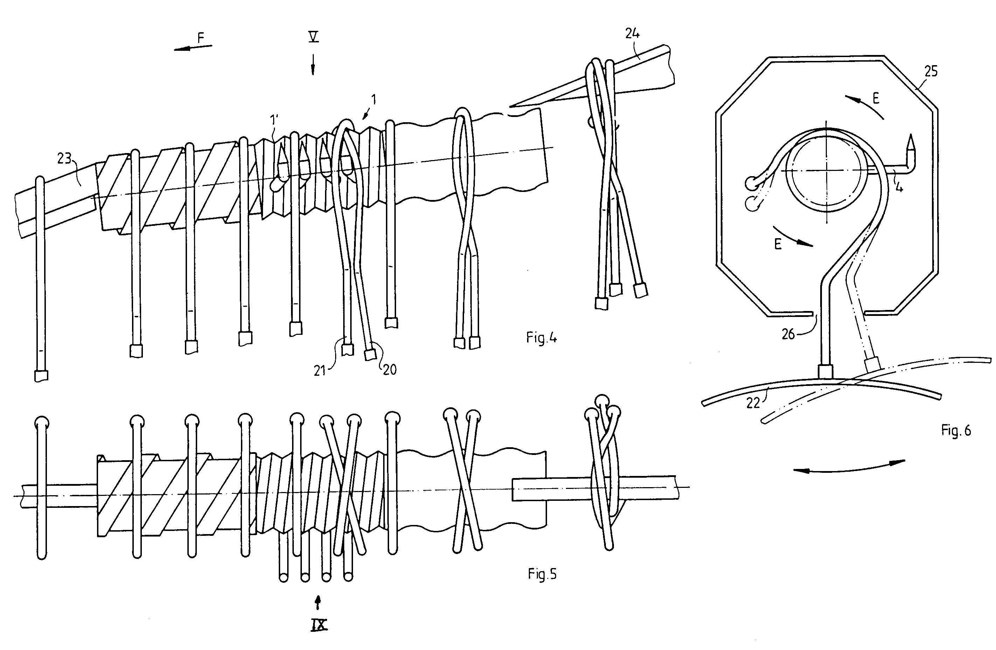

Die Funktionsweise der Vorrichtung soll nachfolgend anhand der Figuren 4 bis 12 erläutert werden.

Über die mit Gefälle angeordnete Rutsche 24 gelangen die Kleiderbügelhaken auf die Spindel 1. Wie den Figuren entnehmbar ist, sind einzelne Bügel miteinander über Kreuz. Die Spindel 1 dreht sich um ihre zentrale Achse gemäß den Sichtpfeilen E. Dadurch werden die Bügelhaken - von denen zwei beispielhaft mit 20,21 bezeichnet sind - in Förderrichtung F transportiert. Sie gelangen in die Gewindegänge 1' der Spindel 1, einzelne Bügel werden ungehindert an den Stiften 4,4',5,5' vorbeitransportiert. Über Kreuz hängende Bügel werden durch den ersten Stift 5 dadurch ergriffen, daß dieser mit der abgekröpften Spitze 12 zwischen die beiden Bügelhaken 20,21 einfährt und den oberen Haken anhebt und ihn freilegt. Sowie die Bügelhaken 20,21 vereinzelt sind, laufen sie ungehindert an den nachfolgenden Stiften 5',4',4 vorbei. Liegen mehr als zwei Bügelhaken übereinander wird zunächst der bezogen auf die Transportrichtung F vordere Bügelhaken von dem ersten Stift 5 erfaßt, und ausgehoben. Der nächste Stift 5' erfaßt dann den dahinterliegenden Bügelhaken usw. Sind die Bügelhaken 20,21 zu stark miteinander verklemmt können die Stifte 4,4',5,5' gemäß den Sichtpfeilen P₁,P₂ (Figur 12) ausweichen.

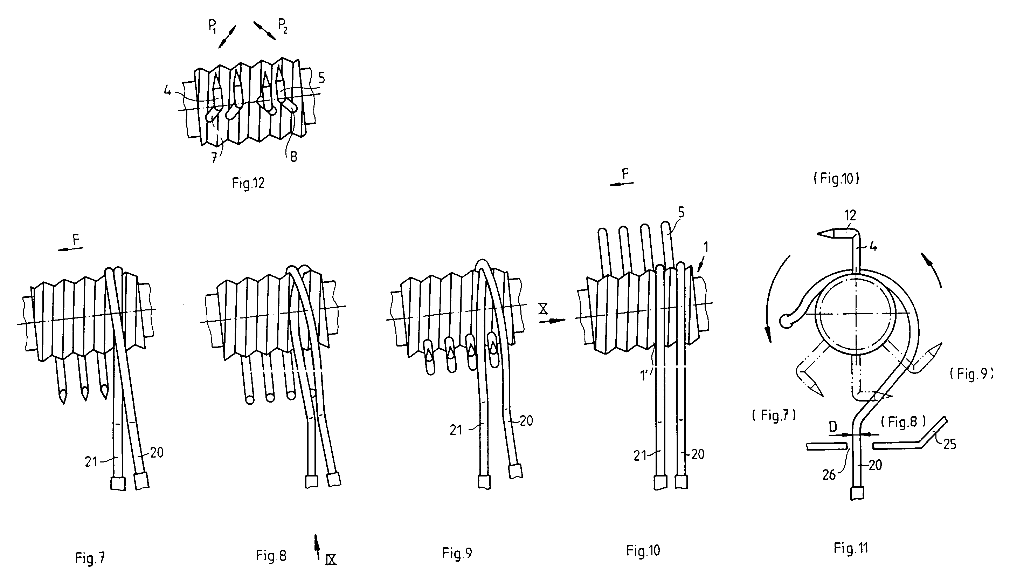

Figur 7 zeigt wie sich der Stift 5 in Richtung der übereinandeliegenden Bügelhaken 20,21 drehend bewegt, Figur 8 ist entnehmbar, wie er zwischen die Hälse der Bügelhaken 20,21 mit der Spitze 12 eintaucht und gemäß Figur 4 auseinander drückt und den Bügelhaken 20 über den Bügelhaken 21 hinaushebt, so daß diese wie in Figur 10 dargestellt in zwei hintereinander verlaufenden Gewindegängen 1' der Spindel 1 zu liegen kommen. Trifft ein Haken direkt auf eine Spitze 12 eines Stiftes 4,4',5,5' und droht zu verkanten, so gibt der Stift 4,4',5,5' durch die federnde Lagerung seiner Welle 2a,2b,3a,3b dem Druck nach und der Haken rutscht an der Spitze vorbei.

Zur Vermeidung von zu starken Schwenkbewegungen des Bügels 22 ist die Spindel 1 von einem Gehäuse 25 umgeben, das im unteren Bereich einen entsprechenden Führungsspalt 26 freiläßt. Etwa schwingende Bügel 22 werden dann durch den Spalt 26 beruhigt.

Die Ausbildung des Gehäuses 25 und des Spaltes 26 ist der Figur 13 entnehmbar, die ansonsten ein weiteres Ausführungsbeispiel der Erfindung zeigt. Anstelle einer Spindel ist als Hohlkörper ein Rohr 27 ausgewählt worden, in dem analog zur vorherigen Beschreibung fünf Stifte parallel nebeneinander gelagert sind. Ebenso wie die Spindel 1 ist das Rohr 27 vorzugsweise mit einem leichten Gefälle in Förderrichtung F angeordnet, um ein sicheres Transportieren zu gewährleisten. Am Ende der Vereinzelungsvorrichtung kann eine Abgabestange 23 vorgesehen sein, entlang der die Bügel bzw. Bügelhaken zu ihrem weiteren Bestimmungsort rutschen können.

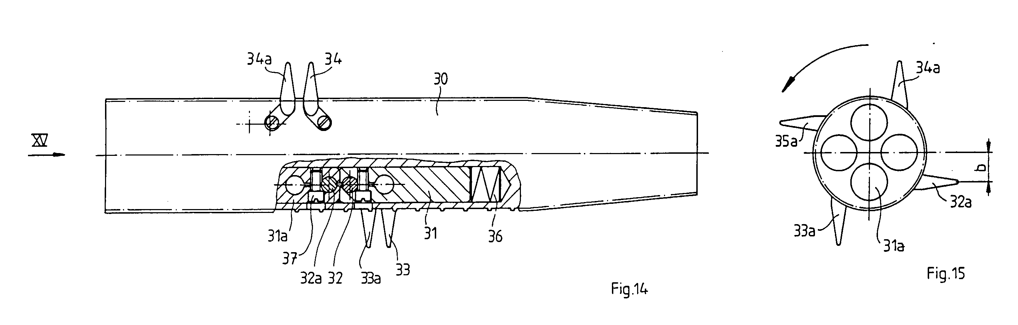

Figuren 14 und 15 zeigen ein weiteres Ausführungsbeispiel einer Vereinzelungsvorrichtung. Hierbei sind die Stifte 32, 32a, 33, 33a und 34, 34a jeweils paarweise zusammengefaßt und paarweise um 90° versetzt angeordnet. Die Stifte 32, 32a, 33, 33a, 34, 34a werden in Bolzen 31, 31a eingeschraubt. Die Bolzen 31, 31a, von denen jeder nur einen Stift trägt, stützen sich über Druckfedern 36 in einer Bohrung in der Welle 30 ab. Bei diesem Ausführungsbeispiel ist die Welle 30 kein reiner Hohlkörper, sondern sie ist mit den Bolzen 31, 31a angepaßten Bohrungen versehen. Über die Klemmschrauben 37 werden die Stifte 32, 32a in den Bolzen 31, 31a geklemmt.

Die Stifte 32, 32a, 33, 33a, 34, 34a können abgekröpft oder gerade sein. Die Stifte sind radial so versetzt angeordnet, daß ihre Längsachse nicht mit einem Radialstrahl fluchtet, sondern in einem parallelen Abstand b hierzu verläuft.

## Patentansprüche

1. Vorrichtung zum Vereinzeln von übereinander verkreuzten Haken (20,21) eines auf Bügeln (22) oder dergleichen hängend transportierten Fördergutes, mit einem sich drehenden, im wesentlichen zylinderförmigen zumindest teilweise hohlen Körper (1), den die Haken (20, 21) umgreifen und von dem sie transportiert werden, wobei der Körper (1) eine radial nach außen weisende, zwischen zwei Haken (20,21) greifende Vereinzelungeinrichtung aufweist, **dadurch gekennzeichnet**, **daß** die Vereinzelungseinrichtung eine Mehrzahl parallel angeordneter Stifte (4,4',5,5') aufweist, die im Inneren des Körpers (1) federnd gelagert sind und über Langlöcher (7,7',8,8') aus dem Körper (1) herausragen.

2. Vorrichtung nach Anspruch 1, **dadurch gekennzeichnet**, **daß** die Stifte (4,4',5,5') an einer axial verschiebbar gelagerten, drehbaren Welle (2a,2b,3a,3b) befestigt sind.

3. Vorrichtung nach Anspruch 2, **dadurch gekennzeichnet**, **daß** jeder Stift (4,4',5,5') an einer separaten Welle (2b,3b,2a,3a) befestigt ist.

4. Vorrichtung nach Anspruch 3, **dadurch gekennzeichnet**, **daß** die Wellen (2a,3a,2b,3b) ineinandergesteckt und in symmetrischer Anordnung gegenüber einer radialen Linie (A) spiegelbildlich im Körper (1) angeordnet sind.

5. Vorrichtung nach Anspruch 4, **dadurch gekennzeichnet**, **daß** vier Stifte (4,4',5,5') vorgesehen sind und davon zwei auf Hohlwellen (2a,2b) und zwei auf Vollwellen (3a,3b) angeordnet sind und je eine Vollwelle (3a,3b) in einer Hohlwelle (2a,2b) verläuft.

6. Vorrichtung nach Anspruch 4, **dadurch gekennzeichnet**, **daß** die Langlöcher (7,7',8,8') tangential schräg verlaufen.

7. Vorrichtung nach Anspruch 2, **dadurch gekennzeichnet**, **daß** die Stifte (4,4',5,5') mittels Schrauben (11) in der Welle (2a,2b,3a,3b) befestigt sind.

8. Vorrichtung nach Anspruch 1, **dadurch gekennzeichnet**, **daß** die Stifte (4,4',5,5') eine abgekröpfte Spitze (12) aufweisen.

9. Vorrichtung nach Anspruch 1, **dadurch gekennzeichnet**, **daß** der Körper (1) eine Spindel ist.

10. Vorrichtung nach Anspruch 9, **dadurch gekennzeichnet**, **daß** die Spindel (1) beidseitig mit einer Welle verbunden ist.

11. Vorrichtung nach Anspruch 1, **dadurch gekennzeichnet**, **daß** die Stifte (32,32a,33,33a,34,34a,35,35a) axial und radial versetzt angeordnet sind.

12. Vorrichtung nach Anspruch 1, **dadurch gekennzeichnet**, **daß** für jeden Stift (4,4',5,5',32,32a,33,33a,34,34a,35,35a) eine kombinierte axiale und radiale Bewegung ausführbar ist.

13. Vorrichtung nach Anspruch 1, **dadurch gekennzeichnet**, **daß** die Stifte (32,32a,33,33a,34,34a,35,35a) jeweils in einem axial gefederten Bolzen (31,31a) gelagert sind, und mindestens acht Bolzen (31a) im Inneren des Körpers (1) vorgesehen sind.

14. Vorrichtung nach Anspruch 1, **dadurch gekennzeichnet**, **daß** die Stifte (4,4',5,5',32,32a,33,33a,34,34a,35,35a) in einer elastischen Masse, wie Gummi oder dergleichen vergossen sind.

15. Vorrichtung nach Anspruch 11, **dadurch gekennzeichnet**, **daß** die Stifte (32,32a,33,33a,34,34a,35,35a) jeweils paarweise radial um 90° versetzt angeordnet sind.

16. Vorrichtung nach einem oder mehreren der vorstehenden Ansprüche, **dadurch gekennzeichnet**, **daß** die Stifte (32,32a,33,33a,34,34a,35,35a) jeweils so angeordnet sind, daß ihre zentrale Achse einen parallelen Abstand (b) zu einem radialen Strahl einnimmt.

## Claims

1. A device for separating superposed crossed hooks (20, 21) of a product conveyor which effects suspended transport on hangers (22) or the like, comprising a rotating substantially cylindrical at least partly hollow body (1) which the hooks (20, 21) surround and by means of which they are conveyed, wherein the body (1) has a radially outwardly extending separating device which grips between two hooks (20, 21), **characterised in that** the separating device comprises a plurality of parallel pins (4, 4', 5, 5') which are spring-mounted in the interior of the body (1) and project from the body (1) through elongate holes (7, 7', 8, 8').

2. A device according to claim 1, **characterised in that** the pins (4, 4', 5, 5') are fastened to a rotatable shaft (2a, 2b, 3a, 3b) mounted so as to be axially movable.

3. A device according to claim 2, **characterised in that** each pin (4, 4', 5, 5') is fastened to a separate shaft (2b, 3b, 2a, 3a).

4. A device according to claim 3, **characterised in that** the shafts (2a, 3a, 2b, 3b) are inserted in one another, mirror-inverted and arranged symmetrically relative to a radial line (A) in the body (1).

5. A device according to claim 4, **characterised in that** four pins (4, 4', 5, 5') are provided, two of which are disposed on hollow shafts (2a, 2b) and two on solid shafts (3a, 3b), each solid shaft (3a, 3b) extending in a hollow shaft (2a, 2b).

6. A device according to claim 4, **characterised in that** the elongate holes (7, 7', 8, 8') slope tangentially.

7. A device according to claim 2, **characterised in that** the pins (4, 4', 5, 5') are fastened to the shaft (2a, 2b, 3a, 3b) by screws (11).

8. A device according to claim 1, **characterised in that** the pins (4, 4', 5, 5') have a bent tip (12).

9. A device according to claim 1, **characterised in that** the body (1) is a spindle.

10. A device according to claim 9, **characterised in that** the spindle (1) is connected to a shaft at both ends.

11. A device according to claim 1, **characterised in that** the pins (32, 32a, 33, 33a, 34, 34a, 35, 35a) are axially and radially offset.

12. A device according to claim 1, **characterised in that** each pin (4, 4', 5, 5', 32, 32a, 33, 33a, 34, 34a, 35, 35a) can make a combined axial and radial movement.

13. A device according to claim 1, **characterised in that** the pins (32, 32a, 33, 33a, 34, 34a, 35, 35a) are each mounted on an axially spring-suspended bolt (31, 31a) and at least eight bolts (31a) are provided inside the body (1).

14. A device according to claim 1, **characterised in that** the pins (4, 4', 5, 5', 32, 32a, 33, 33a, 34, 34a, 35, 35a) are embedded by casting in a resilient material such as rubber or the like.

15. A device according to claim 11, **characterised in that** the pins (32, 32a, 33, 33a, 34, 34a, 35, 35a) are disposed in pairs and radially offset by 90°.

16. A device according to one or more of the preceding claims, **characterised in that** the pins (32, 32a, 33, 33a, 34, 34a, 35, 35a) are so disposed that their central axis is at a parallel distance (b )from a radius.

## Revendications

1. Dispositif pour séparer des crochets superposés de travers (20, 21) d'une marchandise transportée suspendue sur des cintres (22) ou analogues, comprenant un corps (1) au moins partiellement creux, sensiblement cylindrique et en rotation, que les crochets (20, 21) entourent et par lequel ils sont transportés, le corps (1) présentant un dispositif de séparation dirigé radialement vers l'extérieur, s'engageant entre deux crochets (20, 21) caractérisé en ce que le dispositif de séparation présente plusieurs doigts (4, 4', 5, 5') agencés parallèlement qui sont supportés élastiquement à l'intérieur du corps (1) et font saillie hors du corps (1) par des trous allongés (7, 7', 8, 8').

2. Dispositif selon la revendication 1, caractérisé en ce que les doigts (4, 4', 5, 5') sont fixés à un arbre (2a, 2b, 3a, 3b) supporté axialement coulissant, pouvant tourner.

3. Dispositif selon la revendication 2, caractérisé en ce que chaque doigt (4, 4', 5, 5') est fixé à un arbre séparé (2b, 3b, 2a, 3a).

4. Dispositif selon la revendication 3, caractérisé en ce que les arbres (2a, 3a, 2b, 3b) sont emmanchés les uns dans les autres et disposés en symétrie miroir dans le corps (1) selon un agencement symétrique par rapport à une ligne radiale (A).

5. Dispositif selon la revendication 4, caractérisé en ce qu' il est prévu quatre doigts (4, 4', 5, 5') dont deux sont disposés sur des arbres creux (2a, 2b) et deux sur des arbres pleins (3a, 3b), et les arbres pleins (3a, 3b) s'étendent chacun dans un arbre creux (2a, 2b).

6. Dispositif selon la revendication 4, caractérisé en ce que les trous allongés (7, 7', 8, 8') s'étendent tangentiellement et obliquement.

7. Dispositif selon la revendication 2, caractérisé en ce que les doigts (4, 4', 5, 5') sont fixés dans l'arbre (2a, 2b, 3a, 3b) au moyen de vis (11).

8. Dispositif selon la revendication 1, caractérisé en ce que les doigts (4, 4', 5, 5') présentent une pointe coudée (12).

9. Dispositif selon la revendication 1, caractérisé en ce que le corps (1) est une broche.

10. Dispositif selon la revendication 9, caractérisé en ce que la broche (1) est reliée des deux côtés avec un arbre.

11. Dispositif selon la revendication 1, caractérisé en ce que les doigts (32, 32a, 33, 33a, 34, 34a, 35, 35a) sont disposés axialement et radialement décalés.

12. Dispositif selon la revendication 1, caractérisé en ce que chaque doigt (4, 4', 5, 5', 32, 32a, 33, 33a, 34, 34a, 35, 35a) est capable d'un mouvement axial et radial combiné.

13. Dispositif selon la revendication 1, caractérisé en ce que les doigts (32, 32a, 33, 33a, 34, 34a, 35, 35a) sont supportés chacun dans une tige sollicitée élastiquement en direction axiale, et il est prévu au moins huit tiges (31a) à l'intérieur du corps (1).

14. Dispositif selon la revendication 1, caractérisé en ce que les doigts (4, 4', 5, 5', 32, 32a, 33, 33a, 34, 34a, 35, 35a) sont emprisonnés dans une masse élastique comme du caoutchouc ou analogue.

15. Dispositif selon la revendication 11, caractérisé en ce que les doigts (32, 32a, 33, 33a, 34, 34a, 35, 35a) sont agencés par paires décalées radialement de 90°.

16. Dispositif selon une ou plusieurs des revendications précédentes, caractérisé en ce que les doigts (32, 32a, 33, 33a, 34, 34a, 35, 35a) sont chacun disposés de façon que leur axe central prenne une distance parallèle (b) par rapport à un rayon radial.
